# EUROPÄISCHE PATENTSCHRIFT

(11) **EP 1 403 232 B1**
(45) Veröffentlichungstag und Bekanntmachung des Hinweises auf die Patenterteilung: **15.02.2012**
(21) Anmeldenummer: 03019897.2
(22) Anmeldetag: 02.09.2003
(51) Int. Cl.: C04B 38/00, F16J 13/24

(54) **Flammensperrender Festkörper**
Flame-arresting solid material
Materiau solide coupe-flamme

(30) Priorität: 27.09.2002 DE 10245307
(43) Veröffentlichungstag der Anmeldung: 31.03.2004
(73) Patentinhaber: Brilex Gesellschaft für Explosionsschutz mbH, 59929 Brilon (DE)
(72) Erfinder: Bunse, Martin, 59929 Brilon (DE)
(74) Vertreter: Grundmann, Dirk

(56) Entgegenhaltungen:
- WO-A-98/05914
- WO-A-03/008357
- DE-U1- 20 208 576
- GB-A- 2 168 336
- US-A- 4 871 694
- US-A- 5 750 449

## Beschreibung

Die Erfindung betrifft die Verwendung eines flammensperrenden Festkörpers gemäß Anspruch 1.

Ein derartiger Festkörper aus einem Aluminiumschaum wird von der Gebrauchsmusterschrift DE 202 08 576 U1 beschrieben. Dieser Festkörper wird dort anhand einer Druckentlastungsvorrichtung mit einer eine Öffnung eines Behälters oder dergleichen verschließenden Berstscheibe beschrieben, die bei Überschreiten einer vorbestimmten Druckdifferenz in einen Hohlraum eines behälteraußenseitig angeordneten Korbes öffnet, dessen gasdurchlässigen Wände durch Wärmeabfuhr flammensperrend wirken. Die gasdurchströmbaren Wände sind dort außenseitig als grobmaschiges Gitter ausgebildet und von einem offenporigen Metallschaum aus Aluminium hinterlegt.

Zufolge der Schmelztemperatur des Aluminiums können diese Festkörper meistens nur einmal verwendet werden. Außerdem sind die erforderlichen Wandstärken relativ hoch.

Der Erfindung liegt die Aufgabe zugrunde, den eingangs genannten Festkörper gebrauchsvorteilhaft weiterzubilden.

Die Erfindung betrifft ferner eine Flammen-, Explosions- oder Detonationssperre, die in eine gasdurchströmte Leitung einbringbar ist bzw. die einer Absaugvorrichtung für Stäube oder dergleichen zuzuordnen ist.

Gelöst wird die Aufgabe durch die in den Ansprüchen angegebene Erfindung. Der Anspruch 1 schlägt zunächst und im Wesentlichen vor, dass das Material des flammensperrenden Festkörpers keramisch ist. In Betracht kommt als Material ein Siliciumcarbitschaum, ein Zirkonoxidschaum oder ein Schaum aus Mullit. Die Porösität, die sich für die Verwendung eines derartigen keramischen Schaumes als flammensperrender Festkörper besonders ausgezeichnet hat, liegt zwischen 10 und 50 ppi (durchschnittliche Anzahl an Poren pro "linear inch"). Im Stand der Technik ist es bekannt, derartige Schaumkeramiken als Gießfilter oder Wärmetauscher zu verwenden. Bei der Verwendung als Gießfilter wird durch das außerordentlich temperaturbelastbare Material mit einer Schmelztemperatur von bis zu 1680°C eine Metallschmelze geleitet. Im Stand der Technik ist es auch bekannt, keramische Schäume zur Dekoration bspw. in Aquarien zu verwenden. Ferner werden keramische Schäume als Baustoffe verwendet. Die Verwendung von Keramikschäumen beschreibt insbesondere das Fraunhofer-Magazin 9,1999.

Es ist ferner bekannt, einen keramischen Schaum zur Unterstützung einer katalytischen Verbrennung bzw. einer Flammenbildung zu verwenden. Dabei sollen die Flammen innerhalb des Schaumes brennen. Dieser muss dazu eine entsprechend hohe Temperatur besitzen.

Erfindungsgemäß wird der zuvor beschriebene Festkörper, dessen Materialstärke zwischen 20 und 50 mm betragen kann und bevorzugt zwischen 22 und 44 mm liegt, als Flammen-, Explosions- oder Detonationssperre verwendet. Eine solche Sperre kann in eine gasdurchströmte bspw. luftdurchströmte Leitung, insbesondere in ein Rohr eingebracht werden. Der Keramikschaum besitzt dann eine Umrisskontur, die der Innenkontur der Leitung oder des Rohres entspricht. Dabei kann der gleichsam als Stopfen in das Rohr eingebrachte Festkörper auch aus mehreren Einzelteilen bestehen, die in geeigneter Weise miteinander verbunden sind. Wesentlich ist, dass das Gas (Luft), welches durch die Leitung bzw. das Rohr strömt, die Poren des Keramikschaumes durchströmt. Zufolge der hohen Wärmekapazität des Materials werden in der Leitung bzw. in dem Rohr ausbreitende Flammfronten beim Durchtritt der Oberfläche des Keramikschaumes gekühlt und damit gelöscht. Eine weitere erfindungsgemäße Verwendung betrifft eine Absaugeinrichtung für Stäube. Diese Absaugeinrichtungen besitzen in der Regel einen Filter durch welchen das mit Staub belastete Gas, bzw. die mit Staub belastete Luft hindurchgesaugt wird. Der Keramikschaum wird in der zuvor beschriebenen Weise stromabwärts des Filters in die Saugleitung gebracht, so dass der Keramikschaum vor einer Saugeinrichtung, bspw. einem Ventilator, angeordnet ist.

Die Erfindung betrifft ferner eine Druckentlastungsvorrichtung mit Berstscheibe, wie sie die DE 202 08 576 U1 beschreibt. Anders als dort kann der offenporige Schaum, mit dem das grobmaschige Gitter hinterfüttert ist, aber nicht aus Metall, sondern aus keramischem Material bestehen.

Anders als beim eingangs geschilderten Stand der Technik sollen die bei einer Explosion auftretenden Flammfronten aber gerade nicht in den Festkörper eintreten. Sie sollen allenfalls geringfügig tief in den Festkörper eintreten, um dann durch Wärmeentzug zu verlöschen. Der Festkörper wird erfindungsgemäß im kalten Zustand, also insbesondere bei Raumtemperatur verwendet.

Ausführungsbeispiele der Erfindung werden nachfolgend anhand beigefügter Zeichnungen erläutert. Es zeigen:
- Fig.1: in grobschematischer Darstellung die Verwendung eines keramischen Schaumes als Flammen-, Explosions- oder Detonationssperre in einem gasdurchströmten Rohr,
- Fig. 2: die Verwendung von einem keramischen Schaum als Flammensperre rückwärtig eines Filters in einer Staubabsaugeinrichtung und
- Fig. 3: ebenfalls schematisch in einer perspektivischen, teilweise aufgebrochenen Darstellung die Verwendung von Keramikschaum bei einer Drukkentlastungsvorrichtung gemäß DE 202 08 576 U1.

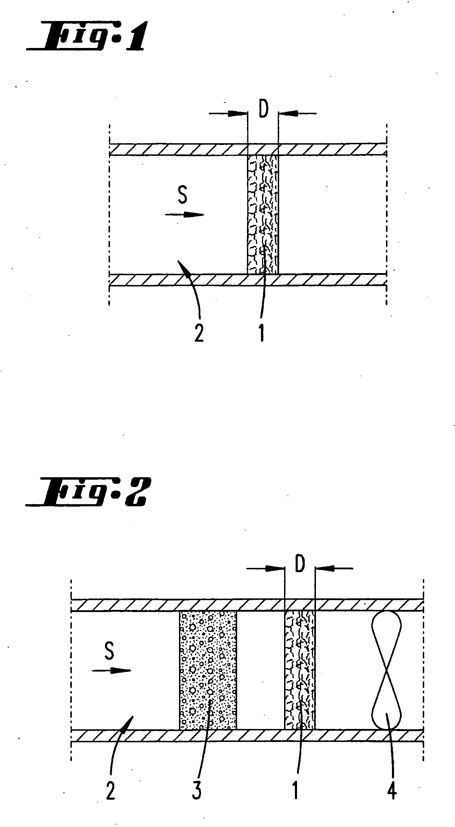

Die Fig. 1 zeigt ein Rohr 2, welches von einem Gas durchströmt ist. Bei diesem Gas kann es sich um Gasgemisch handeln, welches aus einem brennbaren Gas und Luft besteht. Wird diese Gasmischung über ihre Zündtemperatur lokal erwärmt, so kommt es zur Ausbildung einer Flammenfront, die sich in beiden Richtungen im Rohr ausbreitet. In der Fig. 1 ist die Ausbreitungsrichtung mit S bezeichnet. Innerhalb dieses Rohres 2 befindet sich ein flammensperrender Festkörper in Form eines Keramikschaums. Der Keramikschaum kann aus Zirkoniumoxid oder Siliciumcarbid bestehen. Seine Porösität beträgt etwa 20-40 ppi (durchschnittliche Anzahl an Poren pro "linear inch"). Zufolge dieser Porösität kann das Gas oder das Gasgemisch nahezu ungehindert den Keramikschaum 1 durchströmen. Die Dicke D des Schaumkörpers beträgt zwischen 20 und 50 mm. Vorzugsweise werden Platten aus Keramikschaum verwendet, die eine Dicke von 22 mm besitzen. Es können aber auch mehrere Platten hintereinander angeordnet werden, so dass die Gesamtdicke des flammensperrenden Festkörpers 44 mm beträgt. Zufolge einer Schmelztemperatur von bis zu 1680°C kann das Material eine erhebliche Wärmemenge aufnehmen, ohne zu schmelzen. Es ist demzufolge wiederverwendbar.

Bei dem in Fig. 2 dargestellten Ausführungsbeispiel handelt es sich um den Teil einer Staubabsaugvorrichtung, die einen Filter 3 aufweist. Derartige Staubabsaugvorrichtungen können in Schreinereien oder anderen Werkstätten oder Betrieben verwendet werden, in denen Prozesse geführt werden oder Bearbeitungsverfahren angewendet werden, bei denen Staub entsteht. Mittels eines Ventilators oder eines anderweitigen Gebläses, welches an eine Rohrleitung angeschlossen ist, wird der Staub vom Ort seines Entstehens abgesaugt. Das Luft/ Staub-Gemisch wird in einen Filter geleitet, wo sich der Staub abscheidet. Innerhalb der Leitung kann es in ungünstigen Fällen zu Staubexplosionen führen. In Richtung des Gas/Staub-Stromes S abwärts befindet sich in der Leitung 2 ein flammensperrender Festkörper in Form eines Keramikschaumes, wie er zuvor zu Fig. 1 beschrieben worden ist. Auch hier besitzt der Keramikschaum die Form einer Platte mit einer Dicke D mit vorzugsweise 22 mm. Stromabwärts des Keramikschaum-Einsatzes 1, dessen Außenkontur der Innenkontur der Leitung 2 entspricht, befindet sich eine Saugeinrichtung 4 bspw. in Form eines Lüfterrades (Ventilators). Dieses Lüfterrad saugt durch den Filter Luft, die mit Staub belastet ist. Bei einer Staubexplosion kann eine sich ausbreitende Flammfront nicht durch den Keramikschaum-Einsatz 1 hindurchschlagen. Es ist bei der Verwendung eines Keramikschaumes als Flamm-, Explosions- oder Detonations-Schutz sogar möglich, den Keramikschaum selbst als Filter zu verwenden. Vor dem Keramikschaum lagert sich der Staub an. Die Transportluft kann durch den Schaum hindurchgesaugt werden. Anstelle eines Filters kann aber auch ein Staubabscheider bspw. in Form eines Zyklons verwendet werden. Auch dann kann der in die Luftleitung gebrachte Keramikschaumkörper als Rest-Staubfilter dienen.

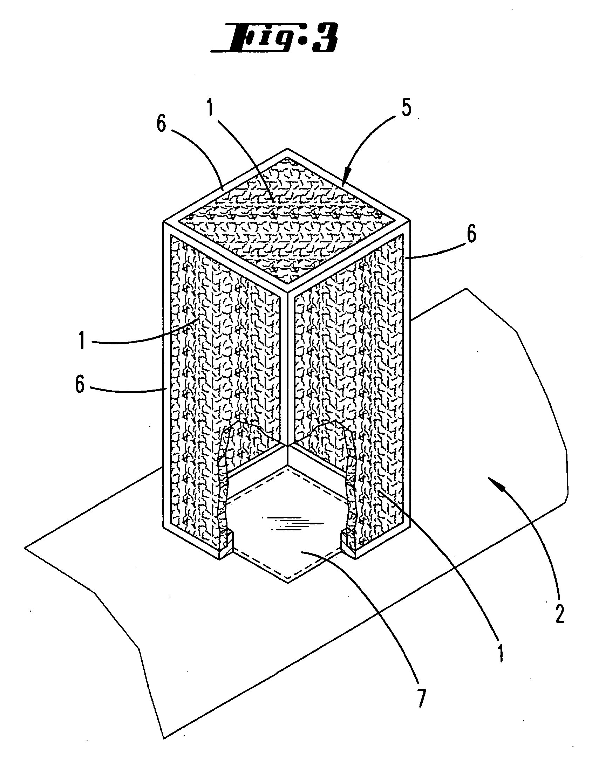

Bei dem in der Fig. 3 dargestellten Ausführungsbeispiel handelt es sich um eine Druckeintlastungsvorrichtung in Form eines quaderförmigen Behälters 5, dessen fünf Seiten aus Platten, die aus einem Keramikmaterial 1 bestehen, gefertigt sind. Mittels eines Rahmens 6 werden die Platten 1 fixiert. Eine Wand des Behälters 5 ist als Berstplatte 7 ausgebildet. Der Behälter kann auf eine Leitung 2 aufgesetzt werden und eine dortige Öffnung mit der Berstplatte 7 verschließen. In der Leitung 2 können explosive Gase oder Stäube in Luft strömen. Kommt es zu einer Explosion, wird der dabei entstehende Druck durch Bersten der Berstplatte 7 abgeleitet. Flammen, die aus der dann entstehenden Öffnung herausschlagen, werden an den Wänden 1 des Behälters 5 gelöscht.

Als Rohmaterialien zur Fertigung der Rohreinsätze (Fig. 1 und 2) bzw. der Behälterwänder (Fig. 3) eignen sich Schaumkeramikplatten, die in Abmessungen von 100 x 100 x 22 mm gefertigt werden. Bei kleinen Flächen können aus derartigen Platten die geeigneten Querschnittsformen herausgesägt werden. Bei gröβeren Flächen werden mehrere derartiger Platten nebeneinander gelegt und in geeigneter Weise miteinander befestigt. Dies kann bspw. durch Aufnahme der Platten in einem Rahmen erfolgen. In einer bevorzugten Ausgestaltung der Erfindung werden eine Vielzahl von Platten auch hintereinander gelegt, um die Materialstärke des Einsatzes 1 bzw. der Wände 1 zu vergrößern.

Anders als bei der Verwendung von keramischem Schaum zur katalytisch unterstützen Verbrennung wird der keramische Schaum bei Raumtemperatur oder zumindest bei einer Temperatur betrieben, die weit unterhalb der Zündtemperatur der Gase liegt, die durch die entsprechenden Leitungen strömen.

Alle offenbarten Merkmale sind (für sich) erfindungswesentlich. In die Offenbarung der Anmeldung wird hiermit auch der Offenbarungsinhalt der zugehörigen/ beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verwendung eines Festkörpers aus einem gasdurchlässigen, porösen und nicht brennbaren keramischen Schaums als flammensperrenden Festkörper,
- in einer gasdurchströmten insbesondere luftdurchströmten Leitung (2), insbesondere in einem Rohr, oder in einer Absaugeinrichtung oder dergleichen für Stäube oder ähnliche Substanzen stromabwärts eines Filters (3) und vor einer Saugeinrichtung (4) als Flammen-, Explosions- oder Detonationssperre, oder
- als Material für die Wände eines Behälters, in dessen Höhlung eine von einer Behälterwand ausgebildeten Berstscheibe (7) öffnen kann.

2. Verwendung nach Anspruch 1, **dadurch gekennzeichnet, dass** der keramische Schaum aus Siliciumcarbid, Zirkonoxid oder Mullit besteht.

3. Verwendung nach einem der vorhergehenden Ansprüche, **dadurch gekennzeichnet, dass** der keramische Schaum eine Porösität zwischen 10 und 50 ppi, bevorzugt zwischen 20 und 40 ppi. besitzt.

4. Verwendung nach einem der vorhergehenden Ansprüche, **dadurch gekennzeichnet, dass** der keramische Schaum in Form von Platten verwendet wird.

5. Verwendung nach Anspruch 4, **dadurch gekennzeichnet, dass** die Materialstärke des keramischen Schaums zwischen 20 und 50 mm, bevorzugt zwischen 22 und 44 mm liegt und besonders bevorzugt 22 mm beträgt.

6. Flammen-, Explosions- oder Detonationssperre für eine gas- insbesondere luftdurchströmte Leitung (2) insbesondere ein Rohr in Form eines offenporigen, der Innenkontur der Leitung (2) angepassten Festkörper aus einem gasdurchlässigen, porösen und nicht brennbaren Schaum, **dadurch gekennzeichnet, dass** der Festkörper zusätzlich die Eigenschaften eines keramischen Schaums besitzt.

7. Druckentlastungsvorrichtung mit einer eine Öffnung eines Behälters oder dergleichen verschließenden Berstscheibe (7), die bei Überschreiten einer vorbestimmten Druckdifferenz in den Hohlraum des Behälters öffnet, dessen gasdurchlässige Wände von einem flammensperrenden Festkörper aus einem gasdurchlässigen, porösen und nicht brennbaren Schaum gebildet sind, **dadurch gekennzeichnet, dass** der Festkörper zusätzlich die Eigenschaften eines keramischen Schaums besitzt.

## Claims

1. Use of a solid made of a gas-permeable, porous and incombustible ceramic foam as a flame-arresting solid,
- in a conduit (2), in particular a pipe, through which gas, in particular air, flows, or in an exhaust device or the like for dust or similar substances downstream of a filter (3) and upstream of a suction device (4), as a flame, explosion or detonation arrester, or
- as material for the walls of a container, into the cavity of which a rupture disk (7) formed by a container wall can open.

2. Use according to claim 1, **characterised in that** the ceramic foam consists of silicon carbide, zirconium oxide or mullite.

3. Use according to any one of the preceding claims, **characterised in that** the ceramic foam has a porosity between 10 and 50 ppi, preferably between 20 and 40 ppi.

4. Use according to any one of the preceding claims, **characterised in that** the ceramic foam is applied in the form of plates.

5. Use according to claim 4, **characterised in that** the material thickness of the ceramic foam is between 20 and 50 mm, preferably between 22 and 44 mm, and particularly preferably 22 mm.

6. Flame, explosion or detonation arrester for a conduit (2), in particular a pipe, through which gas, in particular air, flows, in the form of an open-pored solid adapted to the internal contour of the conduit (2) and made of a gas-permeable, porous and, incombustible foam, through which gas flows, **characterised in that** the solid additionally has the characteristics of a ceramic foam.

7. Pressure relief device having a rupture disk (7) which closes an opening of a container or the like and opens into the hollow space of the container when a predetermined pressure difference is exceeded, the gas-permeable container walls being formed by a flame-arresting solid made of a gas-permeable, porous and incombustible foam, **characterised in that** the solid additionally has the properties of a ceramic foam.

## Revendications

1. Utilisation d'un corps solide constitué d'une mousse céramique perméable aux gaz, poreuse et ininflammable, à titre de corps solide pare-flammes,
- dans une conduite (2) traversée par un gaz, en particulier traversée par l'air,en particulier dans un tube, ou dans un dispositif d'aspiration ou analogue pour des poussières ou des substances analogues en aval d'un filtre (3) et devant un dispositif d'aspiration (4), à titre d'agent de blocage des flammes, des explosions ou des détonations, ou bien
- comme matière pour les parois d'un récipient, dans l'espace creux duquel peut s'ouvrir un disque claquant (7) réalisé par une paroi du récipient.

2. Utilisation selon la revendication 1, **caractérisée en ce que** la mousse céramique est constituée de carbure de silicium, d'oxyde de zirconium ou de mullite.

3. Utilisation selon l'une quelconque des revendications précédentes, **caractérisée en ce que** la mousse céramique possède une porosité entre 10 et 50 pores par pouce, de préférence entre 20 et 40 pores par pouce.

4. Utilisation selon l'une quelconque des revendications précédentes, **caractérisée en ce que** la mousse céramique est utilisée sous la forme de plaques.

5. Utilisation selon la revendication 4, **caractérisée en ce que** l'épaisseur de matière de la mousse céramique se situe entre 20 et 50 mm, de préférence entre 22 et 44 mm, et s'élève de manière particulièrement préférée à 22 mm.

6. Agent de blocage des flammes, des explosions ou des détonations pour une conduite (2) traversée par un gaz, en particulier traversée par l'air, en particulier un tube, sous la forme d'un corps solide à pores ouverts, qui épouse le contour interne de la conduite (2) et qui est constitué par une mousse perméable aux gaz, poreuse et ininflammable, **caractérisé en ce que** le corps solide possède en outre les propriétés d'une mousse céramique.

7. Dispositif de détente comportant un disque claquant (7) obturant une ouverture d'un récipient ou analogue, qui s'ouvre lors du dépassement d'une différence de pression prédéfinie dans l'espace creux du récipient, dont les parois perméables aux gaz sont réalisées à partir d'un corps solide pare-flammes constitué d'une mousse perméable aux gaz, poreuse et ininflammable, **caractérisé en ce que** le corps solide possède en outre les propriétés d'une mousse céramique.
